# EUROPEAN PATENT SPECIFICATION

(11) **EP 2 837 820 B1**
(45) Date of publication and mention of the grant of the patent: **23.03.2016**
(21) Application number: 13180368.6
(22) Date of filing: 14.08.2013
(51) Int. Cl.: F03D 1/06

(54) **Segmented wind turbine hub**
Segmentierte Windturbinennabe
Moyeu de turbine éolienne segmentée

(43) Date of publication of application: 18.02.2015
(73) Proprietor: Siemens Aktiengesellschaft, 80333 München (DE)
(72) Inventor: Ebbesen, Henning, 6900 Skjern (DK)

(56) References cited:
- WO-A2-2011/076795
- DE-A1-102011 013 547
- US-A1- 2011 142 658
- US-A1- 2012 134 840

## Description

This invention discloses a segment of a wind turbine hub and a hub comprising a segment.

Wind turbines comprise at least one rotor blade that is connected to a hub. The hub is rotatable connected to the nacelle of the wind turbine. The nacelle is arranged rotatable on top off a tower.

During operation of the wind turbine, the wind interacts with a rotor blade and rotates the hub. The rotation is transferred via the hub to the nacelle.

Over the last years the development of the wind turbines leads to wind turbines in a higher power range. Meanwhile multi-megawatt wind turbines are common.

As the wind turbines are built at higher power levels, the wind turbines and its components are increased in size. Also the hub of the wind turbine was considerably increased in size over the last years.

The hub of a wind turbine is mostly casted in one piece. This shows the disadvantage that there is a technical limitation to the size of casted objects. In addition, the hub is transported to the erection site of the wind turbine. Also there is a limitation to the maximum size of objects for land transportation.

It is therefore known to build a hub of a wind turbine in segments. The segments are casted independently and are transported to the erection site of the wind turbine. There the segments of the hub are connected to build the hub of the wind turbine.

The segments of the hub are built in a way that they are connected at flanges by bolts, and form one hollow body. So the finished hub resembles the structure of the former non-segmented hub.

The segmented hub shows several problems in relation to the non-segmented hub. One problem is to get sufficient strength of the bolted connection between the segments of the hub.

Another problem is to achieve a sufficient stiffness of the segmented hub, to withstand the forces induced into the hub during the operation of the wind turbine.

In addition, the transfer of the forces within the hub is influenced due to the unsteady walls of the hub.

DE 10 2011 013547 A1 discloses a rotor comprising a rotor shaft with a rotational axis, a rotor with a plurality of rotor blades with profiled blade connection sections that are connected to the shaft. The document discloses that the rotor blade connection sections of neighboring rotor blades are transferring forces directly or indirectly to each other.

It is the aim of the invention to provide an improved segmented hub.

The aim is reached by the subject matter according to the independent claims. Preferred embodiments of the invention are described in the dependent claims.

A wind turbine hub segment is disclosed, whereby the segment comprises a part of the outer surface of the hub. The segment comprises at least one area to connect a segment to at least one other segment. The area to connect the segment comprises a mainly closed surface.

A hub of a wind turbine is divided into at least two segments. A segment comprises a part of the outer surface of the hub.

The hub of a wind turbine is in general planned and built as a hollow body. The hub comprises therefore a hollow space in the middle that is limited by the inner wall of the hub.

In addition, the body of the hub comprises an outer surface. The outer surface of the hub is either visible from the outside when the hub is installed at a wind turbine or it is later covered by an enclosure.

The outer surface of a hub comprises at least one area to connect a rotor blade to the hub. Thus, a wind turbine hub segment may comprise an area or at least a part of an area to connect a rotor blade to the wind turbine hub segment.

The segment comprises at least one area to connect the segment to at least one other segment. Thus the segments can be connected together to form a hub of a wind turbine.

The area to connect the segment comprises a mainly closed surface. Thus the area to connect two segments provides a large surface area that can be used to attach the segment to a second segment. Thus the area to be used with connection means is enlarged. Thus the connection between two wind turbine hub segments is more ridged.

In addition, the stiffness and stability of the wind turbine hub segment is increased by the mainly closed surface. The mainly closed surface bridges a gap between two ends of the body of the hub segment.

A segment of a hub is smaller than the hub itself and thus easier to transport and more lightweight.

A wind turbine hub is normally casted in one piece. A wind turbine hub segment is smaller and is thus easier to be casted.

The segment is hollow and the mainly closed surface is a wall of the segment.

A wind turbine hub normally forms a hollow body. The mainly closed surface of the area to connect the segment to at least one other segment forms a wall of the wind turbine hub segment.

A wind turbine hub, formed of at least two wind turbine hub segments thus is a hollow body, whereby the hollow space inside of the wind turbine hub is divided by the wall of the segment.

Thus, a side of a wind turbine hub is connected to another side of the wind turbine hub by the wall reaching through the hollow space inside of the wind turbine hub. Thus, the sides of the wind turbine hub are connected by a ridged wall. Thus, the wind turbine hub shows a higher stability and is more ridged in respect to deformation.

The wall comprises holes to be used by connection means when the segment is connected to a second segment.

Thus a plurality of connection means can be used to connect one segment to another segment along the surface of the wall of the segment.

Thus the connection means are distributed over a larger surface. Thus the stiffness of the connection between the hub segments is increased.

The connection means are bolts or rivets.

Bolts or rivets can be used to connect a wind turbine hub segment to at least one other wind turbine hub segment.

The bolts or rivets go through the holes in the walls of the segments.

Bolts or rivets are common connection means that can easily be fixed at a construction site of the hub.

Thus, the wind turbine hub segments can be transported to the construction site of the wind turbine separately and can be attached to each other at the construction site.

The wall is prepared and arranged in a way that a connection to the second segment is established by welding.

The walls of the segments that need to be connected is prepared to be welded to each other. Thus the walls are welded to each other.

A welded connection is a very durable connection that, once established, does not need a regular service. Thus a ridged connection is established and service time is saved.

The wall comprises an opening to be used by an electric or hydraulic connection to connect an electric system or a hydraulic system that is used in the hub of the wind turbine.

An electric or hydraulic connection is needed for an electric system or a hydraulic system like for example an electric pitch or a hydraulic pitch system for the rotor blades of the wind turbine.

The pitch system, or a part of a pitch system, for the rotor blades is normally installed inside of the hollow body of the wind turbine hub. A connection to a pitch system or between two pitch systems can be established through an opening in the wall of the wind turbine hub segment.

Thus the pitch system of the rotor blades of the wind turbine can be distributed between the parts of the hollow space inside of the hub of the wind turbine.

Thus a system present in the hub segments can be connected to be operated as one system.

The segment comprises a second connection area to connect a rotor blade to the segment.

Thus a rotor blade is connected to a wind turbine hub segment.

Components needed for the operation of a rotor blade are arranged in the hollow space inside of a wind turbine hub segment.

Thus the wind turbine hub segment is connected to the rotor blade and thereafter the wind turbine hub segments are connected to form a hub of a wind turbine.

The hollow inner space of the segment comprises at least a part of a pitch system and/or a control system and/or a pitch locking system.

Thus the space of a wind turbine hub segment is used for a control system or a pitch system that is used for the operation of the wind turbine.

A wind turbine hub is disclosed, whereby the wind turbine hub comprises at least one segment as described.

A segment of a wind turbine hub is smaller and more lightweight than the wind turbine hub itself. Thus, the segment of a wind turbine hub is easier to transport and easier to install.

Thus, transport capacity can be saved.

A wind turbine hub segment is smaller and comprises less mass. Thus the manufacturing of a wind turbine hub segment is easier and less cost intensive than the production of a wind turbine hub in one piece.

The wind turbine hub is connected by using a segment of a hub at a construction site of the wind turbine hub. The wind turbine hub segments are transported to the production site of the wind turbine hub. A wind turbine hub segment is smaller than a wind turbine hub. Thus, a wind turbine hub easy to be transported and transportation costs are saved.

The hub comprises three segments.

Three segments of a wind turbine hub are connected to each other to form one wind turbine hub.

Today, most of the wind turbines comprise three rotor blades. The three rotor blades are connected to the hub of a wind turbine. The wind turbine hub comprises three segments. Each of the segments is prepared to be connected to one rotor blade. Each of the wind turbine hub segments comprises one area to connect a rotor blade.

In addition, the components needed for the operation of the rotor blade can be installed in the inner hollow space of the wind turbine hub segment. The segments are connected together to from one wind turbine hub.

The segments of the wind turbine hub can be connected together after the rotor blades are connected to the wind turbine hub segments.

The wind turbine hub segments can be connected together after they are hoisted up to the nacelle of the wind turbine together with the rotor blade attached to the wind turbine hub segment.

The wind turbine hub comprises three identical segments to form the hollow structure of the hub.

Three wind turbine hub segments are used to form one wind turbine hub.

Each wind turbine hub segment is a casted body. Three identical segments can be used to form one wind turbine hub.

Thus the wind turbine hub segments are identical bodies. Thus the wind turbine hub segments can be casted in an identical form.

Thus a wind turbine hub segment is a standardized piece. Thus the production of the wind turbine hub segments is easier as only standardized pieces have to be produced.

In addition, transportation devices, needed for the transportation of the wind turbine hub segments, can be standardized.

Thus, the logistics for the transportation of the wind turbine hub segments is easier. Thus, the production and transportation of the wind turbine hub segments is easier and cheaper.

The hub comprises three connection areas to connect a rotor blade.

Wind turbines with three rotor blades are the most effective wind turbines to transfer the energy of the wind into electrical energy.

Thus, three-bladed wind turbines show the lowest cost of material used in relation to the energy generated. Thus, three-bladed wind turbines show the lowest cost of energy produced.

The invention is shown in more detail by the help of figures. The figures show a preferred configuration and do not limit the scope of the invention.
FIG 1 shows a wind turbine hub segment,
FIG 2 shows three wind turbine hub segments,
FIG 3 shows a wind turbine hub.

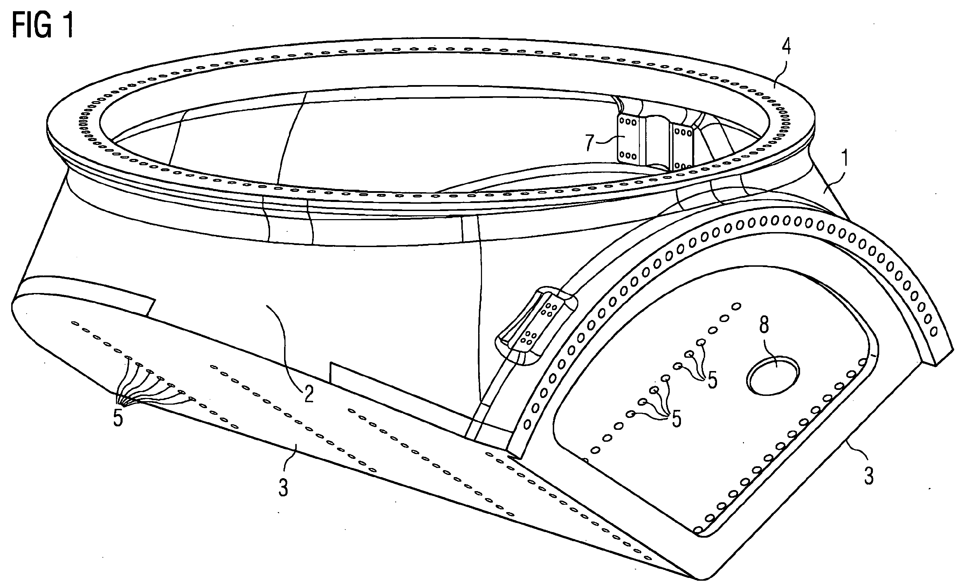

FIG 1 shows a wind turbine hub segment 1. The wind turbine hub segment 1 comprises a part of the outer surface 2 of a hub 6. The outer surface 2 of a hub 6 is a surface that is visible from the outside of the hub when the segments are connected to form a hub 6 of wind turbine.

The wind turbine hub segment 1 comprises an area to connect a segment to another segment of a wind turbine hub. This area comprises a mainly closed surface 3.

The wind turbine hub segment 1 is hollow and the mainly closed surface 3 is the surface of a wall of the wind turbine hub segment 1.

Holes 5 are arranged in the wall of the wind turbine hub segment 1 to be used with connection means like bolts or rivets.

In addition an opening 8 is arranged in the wall of the wind turbine hub segment 1. The opening 8 provides a through going connection from one wind turbine hub segment 1 to a neighboring wind turbine hub segment that can be used for electrical cables or hydraulic connections.

The segment 1 shows an area 4 to connect a rotor blade to the segment. The area 4 to connect a rotor blade is a part of the outer surface 2 of the wind turbine hub segment 1.

In addition the wind turbine hub segment 1 comprises an area 7 to mount a component in the hub segment. A component to mount at the area 7 can be for example a part of a pitch system of the wind turbine. A pitch system of a wind turbine is used to rotate the rotor blade in respect to the hub of the turbine.

The wind turbine hub segment 1 in FIG 1 shows two surfaces 3, thus two walls 3, that closed the wind turbine hub segment 1 so that the segment forms a hollow body. Due to the walls that close the wind turbine hub segment 1 the segment shows a higher stability and a higher stiffness.

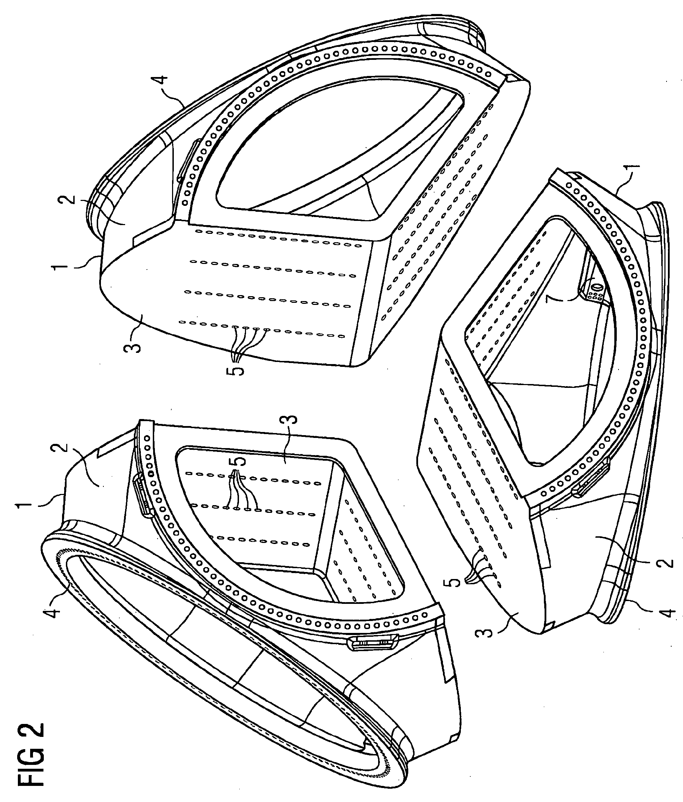

FIG 2 shows three wind turbine hub segments 1 that are arranged to be connected to form a hub of a wind turbine. Each of the segments 1 comprises a part of the outer surface 2 of the hub.

The segments show a mainly closed surface 3 to connect the wind turbine hub segments 1 together. Holes 5 are arranged in a mainly closed surface 3. The wind turbine hub segments 1 can be connected by connection means through the holes 5 that are distributed over the surface 3.

Each of the wind turbine hub segments 1 comprises an area 4 to connect a rotor blade to the wind turbine hub segment. An electrical or hydraulically component like a pitch system can be connected to the wind turbine hub segment 1 at the area 7.

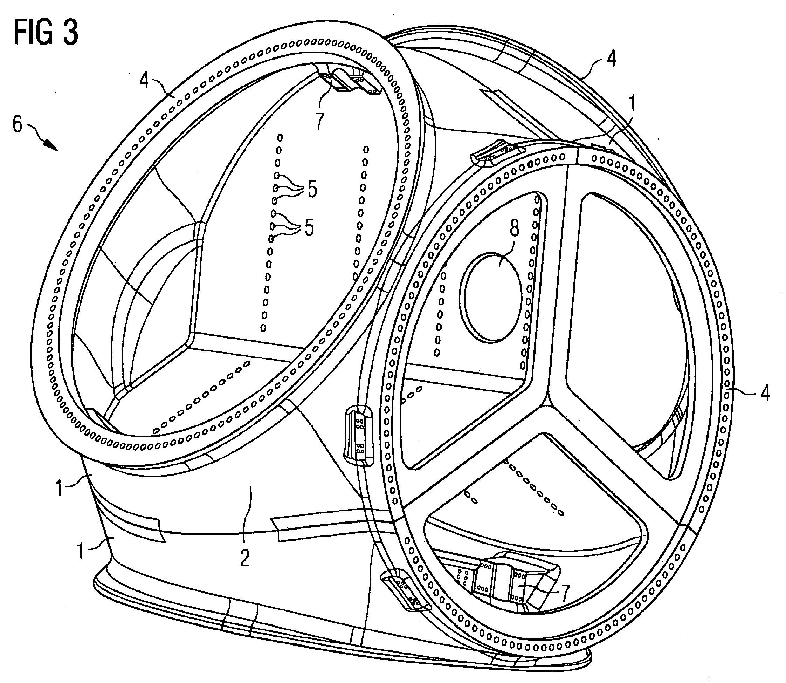

FIG 3 shows a wind turbine hub 6 that comprises three wind turbine hub segments 1. Each of the wind turbine hub segments 1 shows an area 4 to connect a rotor blade to the wind turbine hub.

Electrical or hydraulically components can be mounted to the area 7 in the wind turbine hub segments 1. Holes 5 are arranged in the walls of the wind turbine hub segments to be used by bolts or rivets to connect wind turbine hub segments 1 together.

The walls of the wind turbine hub segments abut on each other along the surface 3 to form inner walls in the hollow body of the wind turbine hub 6. Each of the wind turbine hub segments 1 comprises a part of the outer surface 2 of the wind turbine hub 6.

An opening 8 is provided in the walls of the wind turbine hub segments 1 to provide a through going opening to be used by electric connections of hydraulic connections for example for the pitch system.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Wind turbine hub segment (1),
- whereby the segment (1) comprises a part of the outer surface (2) of a hub (6),
- whereby the segment (1) comprises two areas (3) to connect the segment (1) to two other segments
- whereby each area to connect the segment (1) comprises a mainly closed surface (3),
- **characterized in that** the two areas (3) of the segment meet at an apex that is located, when assembled, adjacent to the apex of the other segments.

2. Wind turbine hub segment (1) according to claim 1, **characterized in that** the segment (1) is hollow and the mainly closed surface (3) is a wall of the segment (1).

3. Wind turbine hub segment (1) according to claim 2, **characterized in that** the wall comprises holes (5) to be used by connection means when the segment (1) is connected to a second segment (1).

4. Wind turbine hub segment (1) according to claim 3, **characterized in that** the connection means are bolts or rivets.

5. Wind turbine hub segment (1) according to claim 2, **characterized in that** the wall is prepared and arranged in a way that the connection to a second segment is established by welding.

6. Wind turbine hub segment (1) according to one of the preceding claims, **characterized in that** the wall comprises an opening (8) to be used by an electric or hydraulic connection to connect an electric system or a hydraulic system that is used in the hub of the wind turbine.

7. Wind turbine hub segment (1) according to one of the preceding claims, **characterized in that** the segment comprises a second connection area (4) to connect a rotor blade to the segment (1).

8. Wind turbine hub segment (1) according to one of the preceding claims, **characterized in that** the hollow inner space of the segment comprises at least a part of a pitch system and/or a control system and/or a pitch locking system.

9. Wind turbine hub (6),
- whereby the wind turbine hub (6) comprises at least one segment (1) according to one of the claims 1 to 8.

10. Wind turbine hub (6) according to claim 9, **characterized in that** the hub (6) comprises three segments (1).

11. Wind turbine hub (6) according to claim 10, **characterized in that** the wind turbine hub (6) comprises three identical segments (1) to form the hollow structure of the hub (6).

12. Wind turbine hub (6) according to claim 9, **characterized in that** the hub (6) comprises three connection areas (4) to connect a rotor blade.

## Patentansprüche

1. Windturbinennabensegment (1),
- wobei das Segment (1) einen Teil der Außenfläche (2) einer Nabe (6) umfasst,
- wobei das Segment (1) zwei Bereiche (3) zum Verbinden des Segments (1) mit zwei anderen Segmenten (1) umfasst,
- wobei jeder Bereich zum Verbinden des Segments (1) eine im Wesentlichen geschlossene Fläche (3) umfasst,
- **dadurch gekennzeichnet, dass** die zwei Bereiche (3) des Segments an einer Spitze aufeinandertreffen, die sich im zusammengebauten Zustand neben der Spitze der anderen Segmente befindet.

2. Windturbinennabensegment (1) nach Anspruch 1, **dadurch gekennzeichnet, dass** das Segment (1) hohl und die im Wesentlichen geschlossene Fläche (3) eine Wand des Segments (1) ist.

3. Windturbinennabensegment (1) nach Anspruch 2, **dadurch gekennzeichnet, dass** die Wand Löcher (5) umfasst, die von Verbindungsmitteln genutzt werden sollen, wenn das Segment (1) mit einem zweiten Segment (1) verbunden ist.

4. Windturbinennabensegment (1) nach Anspruch 3, **dadurch gekennzeichnet, dass** es sich bei den Verbindungsmitteln um Bolzen oder Nieten handelt.

5. Windturbinennabensegment (1) nach Anspruch 2, **dadurch gekennzeichnet, dass** die Wand auf eine Weise vorbereitet und angeordnet ist, dass die Verbindung zu einem zweiten Segment durch Schweißen hergestellt ist.

6. Windturbinennabensegment (1) nach einem der vorhergehenden Ansprüche, **dadurch gekennzeichnet, dass** die Wand eine Öffnung (8) umfasst, die von einer elektrischen oder hydraulischen Verbindung zum Verbinden eines elektrischen oder hydraulischen Systems benutzt werden soll, welches in der Nabe der Windturbine benutzt wird.

7. Windturbinennabensegment (1) nach einem der vorhergehenden Ansprüche, **dadurch gekennzeichnet, dass** das Segment einen zweiten Verbindungsbereich (4) zum Verbinden eines Rotorblatts mit dem Segment (1) umfasst.

8. Windturbinennabensegment (1) nach einem der vorhergehenden Ansprüche, **dadurch gekennzeichnet, dass** der Innenhohlraum des Segments zumindest einen Teil eines Pitch-Systems und/ oder eines Steuersystems und/ oder eines Pitch-Lock-Systems umfasst.

9. Windturbinennabe (6),
- wobei die Windturbinennabe (6) mindestens ein Segment (1) nach einem der Ansprüche 1 bis 8 umfasst.

10. Windturbinennabe (6) nach Anspruch 9, **dadurch gekennzeichnet, dass** die Nabe (6) drei Segmente (1) umfasst.

11. Windturbinennabe (6) nach Anspruch 10, **dadurch gekennzeichnet, dass** die Windturbinennabe (6) drei identische Segmente (1) umfasst, die die Hohlstruktur der Nabe (6) bilden.

12. Windturbinennabe (6) nach Anspruch 9, **dadurch gekennzeichnet, dass** die Nabe (6) drei Verbindungsbereiche (4) zum Verbinden eines Rotorblatts umfasst.

## Revendications

1. Segment (1) de moyeu d'éolienne,
- dans lequel le segment (1) comprend une partie de la surface extérieure (2) d'un moyeu (6),
- dans lequel le segment (1) comprend deux zones (3) pour connecter le segment (1) à deux autres segments (1),
- dans lequel chaque zone pour connecter le segment (1) comprend une surface (3) essentiellement fermée,
- **caractérisé en ce que** les deux zones (3) du segment se rencontrent au niveau d'un sommet qui est situé, lorsqu'il est assemblé, adjacent au sommet des autres segments.

2. Segment (1) de moyeu d'éolienne selon la revendication 1, **caractérisé en ce que** le segment (1) est creux et la surface (3) essentiellement fermée est une paroi du segment (1).

3. Segment (1) de moyeu d'éolienne selon la revendication 2, **caractérisé en ce que** la paroi comprend des trous (5) destinés à être utilisés par des moyens de connexion lorsque le segment (1) est connecté à un autre segment (1).

4. Segment (1) de moyeu d'éolienne selon la revendication 3, **caractérisé en ce que** les moyens de connexion sont des boulons ou des rivets.

5. Segment (1) de moyeu d'éolienne selon la revendication 2, **caractérisé en ce que** la paroi est préparée et agencée d'une manière telle que la connexion à un deuxième segment est établie par soudure.

6. Segment (1) de moyeu d'éolienne selon l'une des revendications précédentes, **caractérisé en ce que** la paroi comprend une ouverture (8) destinée à être utilisée par une connexion électrique ou hydraulique pour connecter un système électrique ou un système hydraulique qui est utilisé dans le moyeu de l'éolienne.

7. Segment (1) de moyeu d'éolienne selon l'une des revendications précédentes, **caractérisé en ce que** le segment comprend une deuxième zone (4) de connexion pour connecter une pale de rotor au segment (1).

8. Segment (1) de moyeu d'éolienne selon l'une des revendications précédentes, **caractérisé en ce que** l'espace intérieur creux du segment comprend au moins une partie d'un système de pas et/ou d'un système de commande et/ou d'un système de verrouillage de pas.

9. Moyeu (6) d'éolienne,
- dans lequel le moyeu (6) d'éolienne comprend au moins un segment (1) selon l'une des revendications 1 à 8.

10. Moyeu (6) d'éolienne selon la revendication 9, **caractérisé en ce que** le moyeu (6) comprend trois segments (1).

11. Moyeu (6) d'éolienne selon la revendication 10, **caractérisé en ce que** le moyeu (6) d'éolienne comprend trois segments (1) identiques pour former la structure creuse du moyeu (6).

12. Moyeu (6) d'éolienne selon la revendication 9, **caractérisé en ce que** le moyeu (6) comprend trois zones (4) de connexion pour connecter une pale de rotor.
